Europäisches Patentamt

European Patent Office

Office européen des brevets

(11) Veröffentlichungsnummer: **0 289 758**
**A2**

## (12) EUROPÄISCHE PATENTANMELDUNG

(21) Anmeldenummer: **88104274.1**

(22) Anmeldetag: **17.03.88**

(51) Int. Cl.⁴: **F16K 5/06**

(30) Priorität: **08.05.87 DE 3715456**

(43) Veröffentlichungstag der Anmeldung:
**09.11.88 Patentblatt 88/45**

(84) Benannte Vertragsstaaten:
**DE FR GB**

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Zattarin, Hans-Werner, Dipl.-Ing.**
**Birkenstrasse 16**
**D-8190 Wolfratshausen(DE)**
Erfinder: **Rosenbusch, Alexander, Dipl.-Ing.**
**Ismaninger Strasse 118**
**D-8000 München 80(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**D-8000 München 80(DE)**

(54) **Kugelhahn.**

(57) Kugelhahn mit einem Gehäuse (1), einer Schaltkugel (2) und zwei Kugeldichtringen (3), welche den Einlaß (1c) und den Auslaß (1c) des Gehäuses umgeben und mit Gleitflächen (3b) an der Schaltkugel abdichtend anliegen. Jeder Kugeldichtring (3) ist an seinem Außenumfang (3'e) von einer zylindrischen Sitzfläche (5'a) des Gehäuses (1) in seiner Axialrichtung verschieblich geführt und durch einen an seinem von der Gleitfläche (3b) abgekehrten Ende angreifenden und sich gegen das Gehäuse abstützenden volumenelastischen Dichtungsring (7) an die Schaltkugel (2) angepresst. Den Ringspalt (6) zwischen dem Außenumfang (3'e) jedes Kugeldichtringes (3) und der Sitzfläche (5'a) überspannt eine ringförmige, aus federndem Metallblech bestehende Abdeckung (8) und verhindert den Eintritt eines zu Ablagerungen neigenden Mediums, so daß die axiale Beweglichkeit des Kugeldichtringe (3) gewahrt bleibt.

FIG. 1

# Kugelhahn

Die Erfindung betrifft einen Kugelhahn mit einem Gehäuse, einer Schaltkugel und wenigstens zwei Kugeldichtringen, welche jeweils einen Ein- bzw. Auslaß umgebend im Gehäuse abdichtend gelagert sind und unter Vorspannung mit einer Gleitfläche an der Schaltkugel abdichtend anliegen, wobei wenigstens einer der Kugeldichtringe an seinem Außenumfang von einer zylindrischen Sitzfläche einer Innenschulter des Gehäuses in seiner Axialrichtung verschieblich geführt und durch eine an seinem von der Gleitfläche abgekehrten Ende angreifende und sich gegen das Gehäuse abstützende Federanordnung in Richtung auf die Schaltkugel vorgespannt ist.

Wird ein derartiger bekannter Kugelhahn für Medien eingesetzt, welche Staub mit sich führen oder aus anderen Gründen zu Ablagerungen neigen, kann sich der Ringspalt zwischen dem Außenumfang des Kugeldichtringes und seiner Sitzfläche im Gehäuse zusetzen, so daß seine axiale Beweglichkeit beeinträchtigt wird oder eine vollständige Blockierung eintritt. Der Kugeldichtring kann dann unter der Wirkung seiner Federanordnung nicht mehr nachsetzen bzw. entgegen der Wirkung der Federanordnung federnd nachgeben, so daß der Kugeldichtring nicht mehr oder mit zu geringer Flächenpressung mit seiner Gleitfläche an der Schaltkugel anliegt, so daß Leckage auftreten kann oder die erwähnte Flächenpressung zu groß wird, beispielsweise durch thermisch bedingte Dimensionsänderungen des Gehäuses, so daß die Schaltkugel blockiert wird.

Aufgabe der Erfindung ist es, einen Kugelhahn so weiterzubilden, daß mit geringem Aufwand eine Blockierung des Kugeldichtringes in seinem Sitz vermieden wird.

Die Erfindung löst diese Aufgabe, ausgehend von einem Kugelhahn der eingangs erläuterten Art dadurch, daß der Ringspalt zwischen dem Außenumfang jedes in Axialrichtung verschieblichen Kugeldichtringes und der zylindrischen Sitzfläche der Innenschulter des Gehäuses von einer ringscheibenförmigen Abdeckung aus federndem Metallblech überspannt und gegen den vom Gehäuse, der Schaltkugel und den Kugeldichtringen begrenzten Raum abgedichtet ist.

Die Abdichtung kann, ohne ihre Funktion zu beeinträchtigen, aus so dünnem Metallblech gefertigt und in ihrer Form so ausgelegt werden, daß ihre Federwirkung diejenige der Federanordnung des Kugeldichtringes praktisch unbeeinflußt läßt. Andererseits kann auch die Abdeckung bewußt zur Modifizierung der Federcharakteristik der Federanordnung herangezogen werden und auch weitere Funktionen übernehmen.

Gemäß einer Ausführungsform ist die Abdeckung an oder benachbart zu ihrem äußeren Umfang am Gehäuse befestigt und liegt mit einer ihrem inneren Umfang benachbarten ringförmigen Fläche oder kreisförmigen Kante an einer am Kugeldichtring ausgebildeten kreisförmigen Kante bzw. ringförmigen Fläche an. Bei dieser Ausführungsform wirkt die Federkraft der Abdeckung derjenigen der Federanordnung des Kugeldichtringes entgegen. Die Abdeckung hält auch bei einem Öffnen des Gehäuses den Kugeldichtring und seine Federanordnung an seinem Platz, so daß die Gefahr einer Beschädigung verringert wird. Gemäß einer anderen Ausführungsform ist die Abdeckung an oder benachbart zu ihrem inneren Umfang am Kugeldichtring befestigt und liegt mit einer ihrem äußeren Umfang benachbarten ringförmigen Fläche oder kreisförmigen Kante an einer am Gehäuse ausgebildeten kreisförmigen Kante bzw. ringförmigen Fläche federnd an. Bei dieser Ausführung verstärkt die Abdeckung die Federwirkung der Federanordnung des Kugeldichtringes.

Weitere Merkmale und Vorteile der Erfindung ergeben sich aus den Unteransprüchen.

Ausführungsbeispiele der Erfindung sind in den Zeichnungen dargestellt und werden im folgenden näher beschrieben. Es zeigt:

Fig. 1 einen Längsschnitt durch einen Kugelhahn mit einer ersten Ausführungsform einer Abdeckung für den Kugeldichtring;

Fig. 2 eine Einzelheit gemäß A in Fig. 1 in vergrößertem Maßstab;

Fig. 3 eine Einzelheit gemäß A in Fig. 1 einer zweiten Ausführungsform;

Fig. 4 eine Einzelheit gemäß A in Fig. 1 einer Modifikation der zweiten Ausführungsform und

Fig. 5 eine Einzelheit gemäß A in Fig. 1 einer zweiten Ausführungsform.

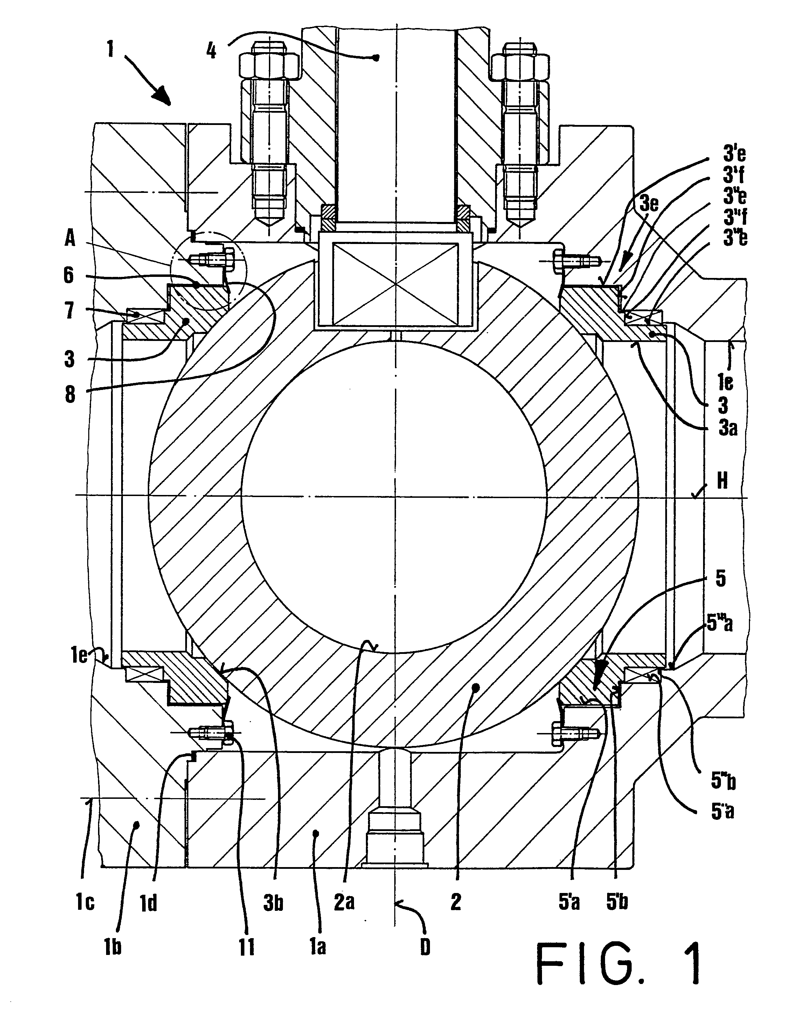

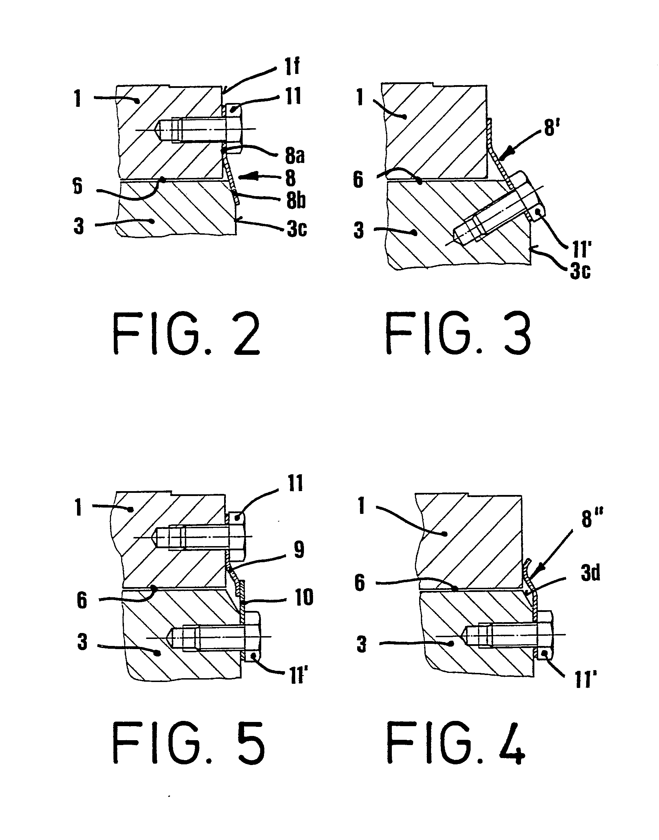

Die in den Fig. 1 und 2 veranschaulichte erste Ausführungsform des Kugelhahns weist ein in seiner Gesamtheit mit 1 bezeichnetes Gehäuse auf, das aus einem Gehäusekörper 1a und einem Gehäusedeckel 1b besteht, die beide durch eine nur symbolisch dargestellte Schraubverbindung 1c zusammengehalten und durch einen Gehäusedichtring 1d gegeneinander abgedichtet sind. Das Gehäuse 1 enthält zwei koaxial zu seiner Hauptachse H angeordnete Durchlaßöffnungen 1e und umschließt eine Schaltkugel 2 mit einer Durchlaßbohrung 2a. Die Schaltkugel 2 ist zwischen konkavsphärischen Gleitflächen 3b zweier im Gehäuse 1 gehaltener Kugeldichtringe gelagert und mittels eines dichtend aus dem Gehäuse herausgeführten Antriebes 4 um eine zur Hauptachse H lotrechte Drehachse D um 90° verdrehbar. Die Kupplung zwischen dem Antrieb 4 und der Schaltkugel 2 ist formschlüssig unter Belassung eines Spiels vorgenommen, so daß die "schwimmende" Lagerung der Schaltkugel auf den Kugeldichtringen 3 nicht beeinträchtigt ist.

Jeder Kugeldichtring 3 ist rotationssymmetrisch zu seiner Längsachse ausgebildet, welche im Einbauzustand mit der Hauptachse H zusammenfällt. Die Bohrung 3a des Kugeldichtringes hat einen der Durchlaßbohrung 2a der Schaltkugel 2 entsprechenden Durchmesser, erweitert sich nahe der (der Drehachse D zugekehrten) Frontseite des Kugeldichtringes und geht hier in die erwähnte Gleitfläche 3b über. Von der Gleitfläche 3b des Kugeldichtringes ausgehend, erstreckt sich radial nach außen eine erste frontseitige, in einer zur Hauptachse H lotrechten Ebene gelegene Ringfläche 3c, an die sich radial auswärts eine zweite frontseitige, kegelstumpfförmige Ringfläche 3d (vgl. Fig. 4) anschließt, deren Erzeugende durch einen auf der Hauptachse H zwischen der vorerwähnten Ebene und der Drehachse D gelegenen Punkt geht. Der Außenumfang 3e des Kugeldichtringes 3 ist von drei im Durchmesser stufenweise abnehmenden Zylinderflächen 3'e, 3"e, 3"'e gebildet, die über rückseitige ebene Ringflächen 3'f, 3"f aneinandergrenzen. Im Gehäusekörper 1a und im Gehäusedeckel 1b ist jeweils eine deren Durchlaßöffnung 1e umgebende und koaxial zur Hauptachse H angeordnete Innenschulter 5 ausgebildet, welche einen Kugeldichtring 3 aufnimmt. Die Innenschulter ist gestuft und weist drei zylindrische Sitzflächen 5'a, 5"a, 5"'a auf, welche über ebene ringförmige Bodenflächen 5'b, 5"b aneinandergrenzen. Die Durchmesser der erwähnten Sitzflächen sind um einen geringen Betrag größer als diejenigen der zugeordneten Zylinderflächen 3'e, 3"e, 3"'e des Kugeldichtringes 3, so daß ein Ringspalt 6 verbleibt, der eine ungehinderte Verschiebebewegung des Kugeldichtringes in Richtung der Hauptachse H erlaubt. In einem Raum, der von der den kleinsten Durchmesser aufweisenden Zylinderfläche 3"'e, der mittleren Sitzfläche 5"a, der rückseitigen Ringfläche 3"f und der ringförmigen Bodenfläche 5"b begrenzt ist, ist ein volumenelastischer rechteckiger Dichtungsring 7 angeordnet, der gleichzeitig die Funktionen einer den Kugeldichtring 3 gegen die Schaltkugel 2 vorspannenden Federanordnung, als auch einer Abdichtung dieses Kugeldichtringes gegenüber dem Gehäuse 1 übernimmt.

Der Ringspalt 6 ist von einer ringscheibenförmigen Abdeckung 8 aus federndem Metallblech überspannt, die einen äußeren ebenen ringförmigen Teil 8a enthält, der in einen inneren kegelstumpfförmigen Teil 8b übergeht (vgl. Fig. 2). Der äußere Teil 8a ist mit mehreren, um den Umfang verteilten Schrauben 11 an einer die zylindrische Sitzfläche 5'a umgebenden ebenen Fläche 1f des Gehäuses 1 (des Gehäusekörpers 1a bzw. des Gehäusedeckels 1b) gehalten, während der innere Teil 8b mit federnder Vorspannung und dichtend an der kegelstumpfförmigen Ringfläche 3d des Kugeldichtringes 3 anliegt. Die Form, insbesondere die Dicke der Abdeckung 8 ist dabei so gewählt, daß die Federhärte der durch die Abdeckung gebildeten Feder kleiner ist als die entgegengesetzt dazu wirkende, durch den Dichtungsring 7 gebildete Federanordnung, d.h., daß der Kugeldichtring 3 immer mit Vorspannung an der Schaltkugel 2 angedrückt bleibt. Die Abdeckung 8 verhindert, daß sich der Ringspalt 6, einschließlich seines zwischen der rückseitigen Ringfläche 3"f und der ringförmigen Bodenfläche 5"b gelegenen Abschnitts, mit Ablagerungen zusetzt und dadurch die axiale Beweglichkeit des Kugeldichtringes 3 beeinträchtigt.

Bei den nachstehend erläuterten weiteren Ausführungsformen bzw. ihren Modifikationen sind gleichgestaltete oder gleichwirkende Bauteile mit entsprechenden Bezugzeichen versehen, die gegebenenfalls durch Indizes ergänzt sind.

Bei der in Fig.3 gezeigten zweiten Ausführungsform ist die Abdeckung 8' mit mehreren, um den Umfang verteilten Schrauben 11' mit ihrem kegelstumpfförmigen Teil an der frontseitigen kegelstumpfförmigen Ringfläche des Kugeldichtringes 3 befestigt und liegt mit ihrem ebenen Teil an der den Ringspalt 6 umgebenden ebenen Fläche des Gehäuses (des Gehäusekörpers 1a bzw. des Gehäusedeckels 1b) an. Bei dieser Ausführungsform übt die Abdeckung eine Federkraft im gleichen Sinn wie die durch den Dichtungsring 7 gebildete Federanordnung auf den Kugeldichtring 3 aus. Gleiches gilt für die Modifikation gemäß Fig. 4 (und die später erläuterte Ausführungsform gemäß Fig. 5), bei welcher die Abdeckung 8" mit Schrauben 11' an der frontseitigen ebenen Ringfläche des Kugeldichtringes 3 befestigt ist und mit der konvexen Seite einer Ringsicke an der ebenen Fläche des Gehäuses 1 anliegt.

Bei der in Fig 5 veranschaulichten dritten Ausführungsform wird der Ringspalt 6 von zwei, jeweils aus federndem Metallblech bestehenden Abdeckungen 9,10 überspannt. Die eine, innere Abdeckung 9 enthälte einen mit mehreren Schrauben 11 an der ebenen Fläche des Gehäuses 1 abdichtend befestigten radial äußeren, ebenen Teil, der über einen kegelstumpfförmigen Teil in einen radial inneren, ebenen Teil übergeht. Letzterer liegt mit federnder Vorspannung an der Rückseite der anderen, äußeren Abdeckung 10 an, welche mit mehreren Schrauben 11' abdichtend an der frontseitigen ebenen Ringfläche des Kugeldichtringes 3 befestigt ist.

Eine andere Modifikation des Kugelhahns, bei der die Abdeckungen die Federwirkung der durch die Dichtungsringe 7 gebildeten Federanordnungen in Bezug auf die betrieblichen Erfordernisse wirksam unterstützen, ergibt sich, wenn derjenigen Durchlaßöffnung 1e des Gehäuses 1, welche mit Druck beaufschlagt wird (bzw. als Einlaßöffnung dient), eine am Kugeldichtring 3 befestigte Abdeckung 8', 8" (Fig. 3 und 4) zugeordnet wird, bzw. bei zweiteiliger Ausbildung die am Kugeldichtring befestigte Abdeckung 10 außen angeordnet wird (Fig. 5). Der anderen Durchlaßöffnung 1e wäre dann eine am Gehäuse 1 befestigte Abdeckung 8 (Fig. 2) zuzuordnen, bzw. es wäre bei zweiteiliger Ausbildung die Anordnung nach Fig. 5 so zu modifizieren, daß die am Gehäuse 1 feste Abdeckung 9 die am Kugeldichtring 3 feste Abedeckung 10 außen übergreift, d.h. an deren vom Ringspalt 6 angewandten Seite federnd anliegt.

**Ansprüche**

1. Kugelhahn mit einem Gehäuse, einer Schaltkugel und wenigstens zwei Kugeldichtringen, welche jeweils einen Ein-bzw. Auslaß umgebend im Gehäuse abdichtend gelagert sind und unter Vorspannung mit einer Gleitfläche an der Schaltkugel abdichtend anliegen, wobei wenigstens einer der Kugeldichtringe an seinem Außenumfang von einer zylindrischen Sitzfläche einer Innenschulter des Gehäuses in seiner Axialrichtung verschieblich geführt und durch eine an seinem von der Gleitfläche abgekehrten Ende angreifende und sich gegen das Gehäuse abstützende Federanordnung in Richtung auf die Schaltkugel vorgespannt ist, **dadurch gekennzeichnet,** daß der Ringspalt (6) zwischen dem Außenumfang (3e) jedes in Axialrichtung verschieblichen Kugeldichtringes (3) und der zylinderischen Sitzfläche der Innenschulter (5) des Gehäuses (1) von einer ringscheibenförmigen Abdeckung (8; 8'; 8"; 9, 10) aus federndem Metallblech überspannt und gegen den vom Gehäuse (1),der Schaltkugel (2) und den Kugeldichtringen (3) begrenzten Raum abgedichtet ist.

2. Kugelhahn nach Anspruch 1, **dadurch gekennzeichnet,** daß die Abdeckung (8) an oder benachbart zu ihrem äußeren Umfang am Gehäuse (1) befestigt ist und mit einer ihrem inneren Umfang benachbarten ringförmigen Fläche oder kreisförmigen Kante an einer am Kugeldichtring (3) ausgebildeten kreisförmigen Kante bzw. ringförmigen Fläche anliegt.

3. Kugelhahn nach Anspruch 1, **dadurch gekennzeichnet,** daß die Abdeckung (8', 8") an oder benachbart zu ihrem inneren Umfang am Kugeldichtring (3) befestigt ist und mit einer ihrem äußeren Umfang benachbarten ringförmigen Fläche oder kreisförmigen Kante an einer am Gehäuse (1) ausgebildeten kreisförmigen Kante bzw. ringförmigen Fläche federnd anliegt.

4. Kugelhahn nach Anspruch 1, 2 oder 3, **dadurch gekennzeichnet,** daß die Federhärte ( = Federkonstante = dP/df) der Abdeckung (8; 8'; 8") kleiner als diejenige der Federanordnung (7) ist.

5. Kugelhahn nach Ansprüche 2 oder 3, **dadurch gekennzeichnet,** daß die der mit Druck beaufschlagten Durchlaßöffnung (1e) zugeordnete Abdeckung (8', 8") am Kugeldichtring (3) befestigt ist und daß die der als Auslaß dienenden Durchläßöffnung (1e) zugeordnete Abdeckung (8) am Gehäuse (1) befestigt ist.

6. Kugelhahn nach Anspruch 1, **dadurch gekennzeichnet,** daß die Abdeckung im entspannten Zustand die Form einer ebenen Ringscheibe aufweist.

7. Kugelhahn nach Anspruch 1, **dadurch gekennzeichnet,** daß die Abdeckung (8, 8') einen inneren kegelstumpfförmigen Teil (8b) und einen äußeren ebenen ringförmigen Teil (8a) aufweist.

8. Kugelhahn nach Anspruch 1, **dadurch gekennzeichnet,** daß die Abdeckung (8") benachbart zu einem ihrer Umfänge eine Ringsicke aufweist, deren konvexe Seite die ringförmige Anlagekante bildet.

9. Kugelhahn nach Anspruch 1, **dadurch gekennzeichnet,** daß jeder Ringspalt (6) von zwei ringscheibenförmigen Abdeckungen (9,10) aus federndem Metallblech überspannt ist, von denen eine (9) benachbart zu ihrem äußeren Umfang am Gehäuse (1) und die andere (10) benachbart zu ihrem inneren Umfang am Kugeldichtring (3) befestigt ist und daß die beiden Abdeckungen im Bereich ihrer ringförmigen Überlappungszone federnd aneinanderliegen.

10. Kugelhahn nach Anspruch 9, **dadurch gekennzeichnet,** daß die am Kugeldichtring (3) befestigte Abdeckung (10) der Schaltkugel (2) am nächsten liegt.

11. Kugelhahn nach Anspruch 9, **dadurch gekennzeichnet,** daß die resultierende Federhärte der Gesamtheit beider Abdeckungen kleiner als diejenigen der Federanordnung (7) ist.

FIG. 1

FIG. 2

FIG. 3

FIG. 5

FIG. 4